# EUROPÄISCHE PATENTSCHRIFT

(11) **EP 2 300 730 B1**
(45) Veröffentlichungstag und Bekanntmachung des Hinweises auf die Patenterteilung: **25.12.2013**
(21) Anmeldenummer: 09777144.8
(22) Anmeldetag: 13.07.2009
(51) Int. Cl.: F16D 65/092

(54) **BREMSBELAG FÜR EINE SCHEIBENBREMSE UND BREMSBELAGSYSTEM**
BRAKE LINING FOR A DISC BRAKE AND BRAKE LINING SYSTEM
GARNITURE DE FREINAGE POUR UN FREIN À DISQUE ET SYSTÈME DE GARNITURE DE FREINAGE

(30) Priorität: 24.07.2008 DE 102008034755; 28.07.2008 DE 102008035170; 26.08.2008 DE 102008039672
(43) Veröffentlichungstag der Anmeldung: 30.03.2011
(73) Patentinhaber: Becorit Gmbh, 45659 Recklinghausen (DE)
(72) Erfinder: FREUDENBERG, Herbert, 44795 Bochum (DE)
(74) Vertreter: Von Rohr
(86) Internationale Anmeldenummer: PCT/EP2009/005066
(87) Internationale Veröffentlichungsnummer: WO 2010/009824

(56) Entgegenhaltungen:
- WO-A-2007/060391
- DE-A1- 2 629 793
- DE-A1- 3 231 279
- DE-A1- 4 436 457
- DE-U1- 20 304 404
- JP-A- 61 064 850
- JP-A- 2004 036 719
- JP-A- 2004 036 720
- US-A1- 2005 082 124

## Beschreibung

Die Erfindung betrifft einen Bremsbelag nach Patentanspruch 1 für eine Scheibenbremse, insbesondere für Schienenfahrzeuge, mit wenigstens einem Trägerblech mit mehreren, lösbar am Trägerblech befestigten Reibsegmenten und mit einem Rückenteil, wobei das Trägerblech über wenigstens ein Halteelement am Rückenteil gehalten ist. Darüber hinaus betrifft die vorliegende Erfindung ein modulares Bremsbelagsystem nach Patentanspruch 11 und nach Patentanspruch 12.

Das Dokument DE-A-32 31 279 (Fig. 8 gemäß Oberbegriff des Anspruchs 1 der vorliegenden Erfindung) offenbart einen Bremsbelag für eine Scheibenbremse, insbesondere für Schienenfahrzeuge, mit wenigstens einem Trägerblech mit mehreren, lösbar am Trägerblech befestigten Reibsegmenten und mit einem Rückteil, wobei das Trägerblech über wenigstens ein Halteelement am Rückenteil gehalten ist und das Rückenteil als Gussteil ausgebildet ist. Der bekannte Bremsbelag sieht die Möglichkeit vor, Reibsegmente drehbar an einer Grundplatte zu befestigen und in wenigstens zwei unterschiedlichen Positionen auf der Grundplatte verdrehsicher festzusetzen. Zur Halterung der Reibsegmente ist eine Grundplatte vorgesehen, die in ihrem Randbereich eine Fassung aufweist. In Wirkrichtung der an der Reibfläche während Bremsvorgängen auftretenden Reibkräfte sind die Reibsegmente unter gegenseitiger Abstützung aneinander anlegbar und gemeinsam gegen die Fassung abstützbar. Die Reibsegmente können gerundete Außenseiten aufweisen, so dass sich ein in Aufsicht runder Reibbelagblock ergibt. Die Grundplatte ist hier als Kreisplatte mit kreisringförmiger Fassung ausgebildet.

Das Dokument DE-A-44 36 457 offenbart einen Bremsbelag für eine Scheibenbremse mit wenigstens einem Trägerblech mit mehreren, lösbar am Trägerblech befestigten Reibsegmenten und mit einem Rückenteil, wobei das Trägerblech über wenigstens ein Halteelement am Rückenteil gehalten und als vollflächig ebene Platte ausgebildet ist. Die Randbereiche des Trägerblechs können frei von Umkantungen oder Umbiegungen sein.

Ein weiterer Bremsbelag ist aus dem Dokument US-A-2005/082124 bekannt.

Die bekannten Bremsbeläge weisen zwei Trägerbleche mit einer Mehrzahl von Reibsegmenten auf, die paarweise von einem querträgerartig ausgebildeten Rückenblech gehalten und mit diesem axial nachgiebig verschraubt sind. Jedes Reibsegment ist über mindestens zwei voneinander beabstandete Eingriffselemente verdrehsicher an dem Trägerblech gehalten. Beispielsweise kann ein Reibsegment zwei bolzenförmige Eingriffselemente aufweisen, die auf der dem Reibmaterial abgewandten Flachseite des Reibsegmentes zum Trägerblech hervorragen und in angepaßte Ausnehmungen, insbesondere Bohrungen, des Trägerblechs eingreifen. Darüber hinaus ist ein bolzenförmiges Befestigungsmittel zur Halterung bzw. Befestigung des Reibsegmentes an dem Trägerblech vorgesehen. Das Befestigungsmittel kann bei geeigneter Ausbildung bedarfsweise auch durch ein Eingriffselement gebildet sein. In der Regel dienen die Eingriffselemente allerdings lediglich zur Sicherung des Reibsegmentes gegen ein Verdrehen auf dem Trägerblech und sichern die Reibsegmente nicht gegen ein Abheben von dem Trägerblech. Zur Sicherung des Reibsegmentes gegen ein Abheben von dem Trägerblech ist das Befestigungsmittel vorgesehen. Die Reibsegmente sind voneinander unabhängig bewegbar oder verkippbar, um eine gleichmäßige Beanspruchung der Reibsegmente beim Bremsvorgang sicherzustellen.

Beim Betrieb der Fahrzeuge auf bestimmten Strecken kommt es infolge hoher Beschleunigungen zu einer erheblichen mechanischen Belastung der Bremsbeläge, was zu einem erhöhten Verschleiß der bekannten Bremsbeläge einschließlich der Haltersysteme, insbesondere zu Rissen in den Blechteilen und Zerstörung von Verbindungen (Schweiß- und Nietverbindungen), führt. Beim Bremsvorgang steigt die Temperatur der Bremsscheibe stark an, was einen erhöhten Verschleiß der Bremsscheibe und der Reibsegmente fördert. Aufgrund einer nicht für jede Scheibengröße optimalen Druck- und Geschwindigkeitsverteilung steigt der Verschleiß weiter an und kann auch sehr unregelmäßig über den Bremsgurt verteilt auftreten. Im übrigen treten beim Bremsvorgang störende Bremsgeräusche auf.

Aufgabe der vorliegenden Erfindung ist es, einen Bremsbelag mit verbesserten Eigenschaften zur Verfügung zu stellen.

Die vorgenannte Aufgabe wird durch einen Bremsbelag mit den Merkmalen von Patentanspruch 1, durch ein Bremsbelagsystem mit den Merkmalen von Patentanspruch 11 gelöst und durch ein Bremsbelagsystem mit den Merkmalen von Patentanspruch 12 gelöst.

Der Verschleiß an dem Reibbelag eines Reibsegmentes ist neben der Materialtemperatur und materialspezifischen Eigenschaften insbesondere abhängig von der Geschwindigkeit, mit der sich die Bremsscheibe an der Reibfläche des Reibsegmentes vorbeibewegt, und von dem Anpreßdruck der Reibfläche gegen die Bremsscheibe. Um einen möglichst geringen und gleichmäßigen Verschleiß sicherzustellen, ist eine möglichst optimale Verteilung der Reibflächen der Reibsegmente des Bremsbelages erforderlich, was abhängig ist von geometriebedingten bzw. konstruktionsbedingten Einflußgrößen, wie der Bremsscheibenart (Radbremsscheibe, Wellenbremsscheibe, etc.), dem Durchmesser der Bremsscheibe, der konstruktiven Auslegung des Bremsscheibenhalters, den Einbauverhältnissen und der Größe des Bremsbelages, und weiteren Einflußgrößen, die dem Bremsbetrieb zuzuordnen sind. Beispielsweise können der Fahrzeugbetrieb und die Bremsvorgänge darüber entscheiden, ob für den Verschleiß an Reibsegmenten und Bremsscheibe entweder die Druck- oder die Geschwindigkeitsverteilung über die Reibflächen dominant ist. Im speziellen gilt das für den Schrägverschleiß, der dazu führt, daß die Beläge wesentlich früher als vorgesehen ausgetauscht werden müssen. Weitere betriebsbedingte Einflußgrößen sind die Höhe der Bremsintensität und Streckeneinflüsse, insbesondere hohe mechanische Beschleunigungen des Bremssystems. Darüber hinaus sind bestimmte geforderte Eigenschaften bei Nässe und im Winterbetrieb zu berücksichtigen.

Wenigstens zwei Reibsegmente können eine unterschiedliche Geometrie bzw. Kontur der Reibflächen und/oder unterschiedlich große Reibflächen und/oder Reibflächen mit unterschiedlichem Reibwert aufweisen und/oder aus unterschiedlichen Reibmaterialien bestehen. Es besteht hier die Möglichkeit, beliebige für die optimale Flächenverteilung sinnvolle Geometrien zu nutzen. Beispielsweise können runde und/oder quadratische und/oder rechteckige und/oder rautenförmige und/oder trapezförmige und/oder polygonale Reibsegmente miteinander kombiniert werden. Die Reibfläche eines Reibsegmentes kann zwischen 2 cm² bis 100 cm², vorzugsweise zwischen 4 cm² bis 25 cm², betragen. Durch die Kombination von unterschiedlichen Geometrien ist es möglich, die thermische Belastung in Scheibenbereichen zu reduzieren und damit den Scheibenverschleiß zu verringern und die Naßeigenschaften zu verbessern. Hier kann die Geometrie das Elementes auch so gewählt werden, daß keine Symmetrie zu den Befestigungsbolzen besteht, was eine beliebige Flächengeometrie und somit eine veränderte Druck- und Geschwindigkeitsverteilung zur Bremsscheibe durch einfaches Umstecken der Elemente ermöglicht. Das Reibsegment kann aus beliebigen Reibmaterialien bestehen, insbesondere aus Sintermaterialien, keramischen Materialien oder organischen Reibmaterialien sowie deren Kombinationen. Darüber hinaus können semimetallische Reibmaterialien, Metall-Matrix-Komposite oder Faserverbundwerkstoffe als Reibmaterial sowie deren Kombinationen eingesetzt werden. Reibsegmente mit unterschiedlichem Reibmaterial können kombiniert werden, um eine hohe Reibwertstabilität zu erreichen und Bremsgeräusche zu reduzieren. Der Reibwert der Reibsegmente liegt vorzugsweise im Bereich von µ = 0,1 bis 0,6, wobei auch hier Reibsegmente mit unterschiedlichen Reibwerten kombiniert werden können, um die thermische Belastung in Scheibenbereichen zu reduzieren und damit den Scheibenverschleiß zu verringern. An dieser Stelle wird darauf hingewiesen, daß unterschiedliche Reibsegmente eingesetzt werden können, die sich im Hinblick auf die Geometrie und/oder die Größe der Reibfläche und/oder den Reibwert und/oder das Reibmaterial voneinander unterscheiden. Darüber hinaus ist es aber auch möglich, daß wenigstens ein Reibsegment aus unterschiedlichen Reibmaterialien besteht, wobei das Reibsegment wenigstens zwei Reibflächen aufweist, die durch Bereiche des Reibsegmentes aus unterschiedlichen Reibmaterialien gebildet werden, Die Reibflächen eines Reibsegmentes können auch eine unterschiedliche Geometrie und/oder eine unterschiedliche Größe aufweisen und/oder einen unterschiedlichen Reibwert. Dadurch lassen sich die Naßeigenschaften weiter verbessern und Geräusche zusätzlich reduzieren. Insbesondere kann ein Reibsegment in Mantelform mit einem Mantel aus einem ersten Reibmaterial und mit einer Füllung aus einem zweiten Reibmaterial ausgeführt sein.

Der Füllgrad bzw. Abdeckungsgrad eines Trägerbleches kann je nach Anwendung zwischen 30 % bis 95 %, vorzugsweise zwischen 50 % bis 80 %, betragen, um ein gutes thermisches Verhalten sicherzustellen. Dabei ist der Füllgrad abhängig von der Gegenmaterialgeometrie. Der Füllgrad bzw. Abdeckungsgrad bezieht sich in diesem Zusammenhang auf den Anteil der Gesamtreibfläche der Reibsegmente an der Gesamtfläche einer Außenseite bzw. Oberseite des Trägerblechs.

Schließlich kann durch die Anordnung bzw. durch eine geometrisch optimierte strömungsgünstige Form der Reibsegmente die Reibwertstabilität verbessert und eine längere Lebensdauer der Reibpartner erzielt werden. Im übrigen sind zusätzliche Kühleffekte durch Einsatz unterschiedlicher Reibsegmente möglich.

Die Erfindung betrifft darüber hinaus ein modulares Bremsbelagsystem mit einem Bremsbelag der zuvor beschriebenen Art und mit einem ersten Satz von Reibsegmenten und mit wenigstens einem weiteren Satz von Reibsegmenten, wobei die Reibsegmente des ersten Satzes und die Reibsegmente des zweiten Satzes unterschiedliche Geometrien der Reibflächen und/oder unterschiedlich große Reibflächen aufweisen und/oder aus unterschiedlichen Reibmaterialien bestehen können. Bedarfsweise und in Abhängigkeit von den Anforderungen an den Bremsbelag lassen sich dann Reibsegmente eines ersten Satzes und/oder Reibsegmente eines zweiten Satzes an dem oder den Trägerblech(en) befestigen. Durch den modularen Aufbau des Bremsbelagsystems ist es in einfacher Weise möglich, eine Anpassung der Flächenverteilung der Reibflächen und/oder der Reibmaterialien an die bereits beschriebenen geometrischen und betriebsbedingten Einflußgrößen vorzunehmen, um den Verschleiß an Bremsscheibe und Bremsbelag entsprechend zu verringern. Durch den modularen Aufbau ist es weiter möglich, unterschiedliche Größen des Bremsbelages zu realisieren. Insbesondere können Reibsegmentformen bzw. Konturen der Reibflächen entsprechend ausgewählt werden, um zu einer optimalen Verteilung der Reibflächen zu kommen.

Bei einer alternativen Ausführungsform des erfindungsgemäßen Bremsbelagsystems kann auch vorgesehen sein, daß wenigstens zwei unterschiedliche Trägerbleche bedarfsweise mit einem Rückenteil verbindbar sind, wobei die Befestigungsflächen der Trägerbleche für die Reibsegmente unterschiedlich groß sind und/oder die Trägerbleche unterschiedliche Geometrien der Befestigungsflächen aufweisen und/oder wobei die Trägerbleche eine unterschiedliche Anordnung der Befestigungsstellen und/oder eine unterschiedliche Anzahl von Befestigungsstellen für die Reibsegmente aufweisen können. Auch können alle oder einzelne Trägerbleche mit anderen Trägerblechen, die alternative Aufnahmen für Reibsegmente aufweisen, montiert werden.

Bei einer Ausführungsform der Erfindung ist vorgesehen, daß das Rückenteil als Gußteil ausgebildet ist, was aufgrund der hohen Wärmeleitfähigkeit von Gußbauteilen beim Bremsbetrieb zu einer höheren Wärmeabfuhr aus der Bremsscheibe und damit zu geringeren Scheibentemperaturen führt. Durch die geringeren Scheibentemperaturen können Verschleißerscheinungen an Bremsscheibe und Bremsbelag begrenzt werden, was sich positiv auf die Betriebskosten auswirkt. Im Zusammenhang mit der Erfindung hat sich gezeigt, daß bei Verwendung von Rückenteilen aus einem Gußmaterial die beim Bremsen auftretenden Temperaturen der Bremsscheibe im Vergleich zu der Verwendung von Bremsbelägen mit Rückenteilen aus Blech um bis zu 180 °C reduziert werden können. Einhergehend mit einem gleichmäßigeren Wärmeeintrag sind die Temperaturgradienten deutlich geringer, und somit die Rißneigung reduziert.

Gußteile zeichnen sich durch eine hohe Formstabilität aus. Die Bauteilspannungen in Gußteilen sind auch bei extremen Belastungen vergleichsweise geringer als in Blechteilen, so daß der erfindungsgemäße Bremsbelag mit einem Rückenteil aus einem Gußmaterial eine deutlich verlängerte Standzeit aufweist. Beschleunigungsversuche haben gezeigt, daß es bei dem erfindungsgemäßen Bremsbelag auch bei wechselnden starken Beschleunigungen zu einem geringen Verschleiß kommt, wobei an dem Rückenteil keine Risse aufgetreten sind. Dies ermöglicht den Einsatz des erfindungsgemäßen Bremsbelages auch in Fahrzeugen, die auf Strecken bewegt werden, die zu extremen Beschleunigungen des Bremsbelages beim Bremsvorgang und damit zu hohen Beanspruchungen führen.

Aufgrund der besseren mechanischen Eigenschaften und der besseren Wärmeleiteigenschaften von Rückenteilen aus einem Gußmaterial kann die Dicke des Rückenteils gegenüber den aus dem Stand der Technik bekannten Blechteilen verringert werden, was zu einer Gewichtseinsparung führt oder bei entsprechend größerer Dicke des Rückenteils auch den Einsatz des erfindungsgemäßen Bremsbelagsystems in höheren Leistungsklassen zuläßt. Es führt nur zur Gewichtseinsparung wenn man das Blechteil soweit verändern würde das es die vergleichbare Leistung aufweist.

Durch ein Gußmaterial können schließlich auch die üblichen, bei Blechkonstruktionen auftretenden Frequenzen, die für Quietschgeräusche verantwortlich sind, teilweise in einen für das menschliche Ohr nicht hörbaren Frequenzbereich verschoben werden.

Vorzugsweise besteht das Rückenteil aus Temperguß, insbesondere aus Temperguß mit der Werkstoffbezeichnung EN-GJMB 550-4, vormals GTS-55-04 genannt. Temperguß weist eine hohe mechanische Festigkeit und eine hohe Wärmeleitfähigkeit auf. In diesem Zusammenhang kann das Rückenteil einen Kohlenstoffgehalt von 2 bis 4 Gew.-%, vorzugsweise von ca. 2,8 Gew.-%, und/oder einen Siliziumgehalt von 1 bis 2 Gew.-%, vorzugsweise von ca. 1,3 Gew.-%, und/oder einen Mangangehalt von 0,1 bis 1,0 Gew.-%, vorzugsweise von ca. 0,5 Gew.-%, und/oder einen Schwefelgehalt von 0,05 bis 0,5 Gew.-%, vorzugsweise von ca. 0,1 Gew.-%, aufweisen. Die Zugfestigkeit Rₘ des Rückenteils sollte zwischen 500 bis 600 MPa, vorzugsweise ca. 550 MPa, und/oder die Dehngrenze R_{p0,2} zwischen 300 bis 400 MPa, vorzugsweise ca. 340 MPa, und/oder die Biegewechselfestigkeit RBW 200 bis 300 MPa, vorzugsweise 250 bis 270 MPa, und/oder die Bruchdehnung A 3 bis 5 %, vorzugsweise ca. 4 %, und/oder die Härte nach Brinell 180 bis 300 HB, vorzugsweise ca. 250 HB, betragen.

Das Rückenteil kann wenigstens ein sich vorzugsweise parallel oder unter einem Winkel zur Mittelachse einer Bremsscheibe der Scheibenbremse erstreckendes Langloch für ein Halteelement aufweisen, mit dem das Trägerblech an dem Rückenteil befestigt ist. Dadurch läßt sich das Trägerblech bedarfsweise zwischen wenigstens zwei unterschiedlichen Positionen relativ zu dem Rückenteil verschieben und bedarfsweise an unterschiedlichen Stellen an dem Rückenteil festsetzen. Mit dem Trägerblech wird damit auch die Position der Reibflächen der Reibsegmente verändert, was eine Anpassung der Flächenverteilung der Reibflächen ermöglicht, um beim Bremsvorgang eine optimierte Druck- und Geschwindigkeitsverteilung über den Bremsgurt sicherzustellen. Durch Veränderung der Flächenverteilung der Reibflächen kann das Verschleißverhalten der Reibbeläge und der Bremsscheibe optimiert werden, und zwar in Abhängigkeit von betriebsbedingten und geometrie- bzw. konstruktionsbedingten Anforderungen. Grundsätzlich ist es natürlich auch möglich, daß das Rückenteil versetzt zueinander bzw. exzentrisch angeordnete Haltebohrungen für die Halteelemente aufweist, wobei auch mehrere Haltebohrungen für ein Halteelement vorgesehen sein können, so daß sich das Trägerblech an verschiedenen Stellen des Rückenteils festsetzen läßt.

Bei einer weiteren Ausführungsform der Erfindung ist vorgesehen, daß das Trägerblech vollflächig als ebene Platte ausgebildet ist, wobei die Ränder der Platte frei von Umkantungen oder Umbiegungen sind. Dadurch wird eine größere Raumfreiheit für eine Anordnung der Reibsegmente auf dem Trägerblech ermöglicht. Die Ausbildung als ebene Platte läßt zudem eine einfache Standardisierung der Trägerbleche und eine bessere Anpassung an unterschiedlich ausgebildete Bremsscheiben zu.

Damit es beim Bremsbetrieb nur zu einer geringen Verformung des Trägerblechs kommt, besteht das Trägerblech vorzugsweise aus einem legierten Vergütungsstahl mit einer Zugfestigkeit Rₘ von 600 bis 1.500 MPa, vorzugsweise von 800 bis 1.300 MPa, und/oder einer Dehngrenze R_{p0,2} von 500 bis 1.000 MPa, vorzugsweise von 550 bis 900 MPa, und/oder einer Bruchdehnung A von 8 bis 15 %, vorzugsweise von 10 bis 13 %. Im übrigen kann das Trägerblech einen Kohlenstoffgehalt von 0,3 bis 0,5 Gew.-%, vorzugsweise von 0,38 bis 0,45 Gew.-%,und/oder einen Siliziumgehalt von weniger als 0,6 Gew.-%, vorzugsweise von weniger als 0,4 Gew.-%, und/oder einen Mangangehalt von 0,5 bis 1,0 Gew.-%, vorzugsweise von 0,6 bis 0,9 Gew.-%, und/oder einen Phosphorgehalt von 0,03 bis 0,05 Gew.-%, vorzugsweise von ca. 0,035 Gew.-%, und/oder einen Schwefelgehalt von 0,03 bis 0,05 Gew.-%, vorzugsweise von ca. 0,035 Gew.-%, und/oder einen Chromgehalt von 0,8 bis 1,3 Gew.-%, vorzugsweise von 0,9 bis 1,2 Gew.-%, und/oder einen Molybdängehalt von 0,1 bis 0,4 Gew.-%, vorzugsweise von 0,15 bis 0,3 Gew.-%, aufweisen. Bei einer weiter bevorzugten Ausführungsform besteht das Trägerblech aus Vergütungsstahl mit der Werkstoffbezeichnung 42CrMo4. Vorzugsweise ist eine martensitische Vergütung des Trägerblechs auf eine Zugfestigkeit Rₘ von 1.000 bis 1.200 MPa vorgesehen. Das erfindungsgemäße Trägerblech bleibt beim Betrieb, auch beim Abbremsen hoher Energien und somit bei sehr hohen Temperaturen im System formstabil. Ein Verbiegen des Trägerblechs bei hohen Bremsenergien ist nicht zu befürchten. Ein Richten des Trägerblechs ist nicht notwendig, ebenso wenig Umkantungen oder Umbiegungen an den Rändern.

Das Halteelement und das Trägerblech können auf der die Reibsegmente aufweisenden Außenseite des Trägerblechs ausgefluchtet sein oder die den Reibsegmenten zugewandte Außenseite des Halteelements kann gegenüber der Außenseite des Trägerblechs abgesenkt sein. Wichtig ist, daß das Halteelement auf der Seite der Reibsegmente nicht gegenüber der Oberfläche des Trägerblechs übersteht. Die Reibsegmente können damit bedarfsweise an jeder Stelle des Halteblechs angeordnet werden, ohne daß die Lage des Halteelements die Anordnung der Reibsegmente stört bzw. begrenzt. Dies führt zu einer größeren Raumfreiheit bei der Anordnung der Reibsegmente auf dem Trägerblech.

Um eine optimale Verteilung der Reibflächen der Reibsegmente sicherzustellen und damit einen geringen Verschleiß von Reibflächen und Bremsscheibe, ist bei einer Ausführungsform der Erfindung vorgesehen, daß wenigstens ein Reibsegment drehbar an dem Trägerblech befestigt und in wenigstens zwei unterschiedlichen Positionen bzw. Ausrichtungen auf bzw, an dem Trägerblech verdrehsicher festsetzbar ist. Die Position der Reibsegmente wird in Abhängigkeit von geometrie- bzw. konstruktionsbedingten und betriebsbedingten Anforderungen an den Bremsbelag festgelegt und bedarfsweise abgeändert.

Ein oder mehrere Reibsegmente können in ihrer Position veränderbar sein, um eine Veränderung der Verteilung von Reib- und Anpreßkräften zu ermöglichen. Das Reibsegment läßt sich dabei vorzugsweise um ein Befestigungselement drehen, mit dem das Reibsegment an dem Trägerblech befestigt und gegen ein Abheben gehalten ist. Wenigstens zwei unterschiedliche Endstellungen bzw. Positionen, an denen das Reibsegment verdrehsicher festsetzbar ist, können durch Haltebohrungen für wenigstens ein Sicherungselement in dem Trägerblech vorgegeben sein. Die tatsächliche Anzahl der Haltebohrungen im Trägerblech muß dabei größer sein als die Mindestanzahl von Haltebohrungen, die zum drehsicheren Befestigen der auf dem Trägerblech befestigten Reibsegmente erforderlich sind, d. h. es wird durch eine Mehrzahl von Haltebohrungen die Möglichkeit geschaffen, die Flächenverteilung der Reibflächen zu ändern. Als Verdrehsicherung können Eingriffselemente vorgesehen sein, die auf der der Reibfläche abgewandten Flachseite des Reibsegmentes zur Trägerplatte hin vorragen und in angepaßte Ausnehmungen, insbesondere Haltebohrungen, des Trägerblechs eingreifen. Grundsätzlich kann lediglich ein Eingriffselement oder es können mehrere Eingriffselemente als Verdrehsicherung vorgesehen sein.

Eine Positionsänderung eines Reibsegmentes im Sinne der Erfindung führt zu einer Änderung der Lage der Reibfläche des betreffenden Reibsegmentes relativ zur Trägerblechoberfläche. Durch die Positionsänderung ändert sich auch der Abstand der Reibfläche zu den Reibflächen von benachbarten Reibsegmenten, vorzugsweise um mehr als 1 mm, weiter vorzugsweise um mehr als 2 mm, insbesondere um mehr als 5 mm, weiter insbesondere um mehr als 10 mm. Der erfindungsgemäße Bremsbelag ermöglicht es, die Flächenverteilung der Reibsegmente an die für einen geringen Verschleiß erforderliche optimale Flächenverteilung in einfacher Weise anzupassen, wobei die optimale Flächenverteilung selbstverständlich abhängig ist von den zuvor beschriebenen geometriebedingten und betriebsbedingten Einflußgrößen. Durch die bei der Erfindung vorgesehene Möglichkeit, die Anordnung der Reibflächen optional und anwendungsbezogen an geometriebedingte und betriebsbedingte Einflußgrößen anzupassen, kann eine optimale Druck- und Geschwindigkeitsverteilung über die Reibflächen von Bremsscheibe und Reibsegmenten erreicht werden, was zu einem geringen Verschleiß, insbesondere zu einem geringen Schrägverschleiß der Reibsegmente, beiträgt.

Durch eine optimierte Druckverteilung über die Reibflächen kann auch das Auftreten eines Wasserkeils bei Nässe vermieden werden. Im übrigen kann für alle Scheibenkonstruktionen sichergestellt werden, daß beim Bremsvorgang der ganze Reibgurt bzw. die ganze Reibfläche der Bremsscheibe vom Reibmaterial der Reibsegmente überstrichen wird. Die Position der Reibsegmente kann schließlich so gewählt werden, daß eine optimale Luftführung durch den Reibbelag und somit eine nochmals verbesserte Wärmeableitung gewährleistet wird, was zu einer weiteren Verringerung des Verschleißes an der Bremsscheibe und den Reibsegmenten führt.

Konstruktiv weist der erfindungsgemäße Bremsbelag der Geometrie der Reibsegmente entsprechende Bohrungen in der Trägerplatte auf, die ein Festsetzen der Reibsegmente an unterschiedlichen Positionen auf dem Trägerblech ermöglichen. Der Drehpunkt eines Reibsegmentes kann dabei mit dem Flächenschwerpunkt der Reibfläche zusammenfallen oder auch exzentrisch zum Flächenschwerpunkt angeordnet sein. Vorzugsweise kann das Reibsegment eine nicht-kreisförmige Reibfläche aufweisen, so daß es durch Drehen des Reibsegmentes möglich ist, die Flächenverteilung der Reibflächen mit Bezug auf die Fläche der Trägerplatte zu verändern.

Bei einer weiteren Ausführungsform des erfindungsgemäßen Bremsbelages ist vorgesehen, daß wenigstens ein Reibsegment verschiebbar an dem Trägerblech befestigt und in wenigstens zwei unterschiedlichen Positionen auf dem Trägerblech festsetzbar ist. Nach dem Festsetzen ist dann ein Verschieben nicht mehr möglich, wobei sich durch Verschieben unterschiedliche Positionen des Reibsegmentes einstellen bzw. vorgeben lassen, was ebenfalls zu einer Veränderung der Flächenverteilung der Reibflächen mit Bezug auf die Fläche des Trägerbleches führt. In diesem Zusammenhang kann das Reibsegment entlang einer Ausnehmung des Trägerblechs in der Art einer Kulissenführung verschiebbar geführt sein. Auch hier können mehrere Haltebohrungen in dem Trägerblech vorgesehen sein, um das Reibsegment bedarfsweise in einer oder einer anderen Position auf dem Trägerblech festzusetzen.

Ebensogut ist es möglich, daß wenigstens ein Reibsegment an zwei unterschiedlichen Stellen auf bzw. mit dem Trägerblech befestigbar ist, wobei die Anzahl der möglichen Befestigungsstellen auf dem Trägerblech größer ist als die maximale Anzahl der auf dem Trägerblech befestigbaren Reibsegmente. Die letztgenannte Ausführungsform kann zusätzlich oder alternativ zu der Möglichkeit vorgesehen sein, eine Änderung der Reibflächenverteilung durch Drehen oder Verschieben der Reibsegmente zu erreichen. Wenigstens ein Reibsegment kann durch Umstecken an verschiedenen Stellen des Trägerblechs mit diesem befestigbar sein, wobei es sich versteht, daß das Halteblech an vorgegebenen unterschiedlichen Befestigungsstellen eine oder mehrere Haltebohrung(en) für wenigstens ein Befestigungsmittel und gegebenenfalls ein Sicherungsmittel aufweisen muß, um das Reibsegment bedarfsweise an einer oder einer anderen Stelle an dem Halteblech festzusetzen und gegebenenfalls gegen Verdrehen zu sichern. Im Betriebszustand des Bremsbelages sind dann nicht alle Haltebohrungen im Trägerblech belegt, wobei die Mehrzahl von Haltebohrungen es ermöglicht, zumindest ein Reibsegment bedarfsweise an einer oder einer anderen Stelle des Trägerblechs festzusetzen.

Zur Verringerung von Schwingungen kann wenigstens ein Dämpfungselement aus einem Dämpfungsmaterial zwischen dem Trägerblech und dem Rückenteil angeordnet sein. Durch das Einbringen von Dämpfungsmaterial bzw. Dämpfungssystemen, wobei es sich im einfachsten Fall um eine Feder handeln kann, zwischen den Bauelementen des erfindungsgemäßen Bremsbelages können die für Geräusche verantwortlichen Schwingungen reduziert oder sogar vollständig verhindert werden.

Vorteilhafte Ausgestaltungen und Weiterbildungen werden nachfolgend anhand von Ausführungsbeispielen unter Bezugnahme auf die beigefügte Zeichnung erläutert. In der Zeichnung zeigen
- Fig. 1: eine Draufsicht auf ein als Gußteil ausgebildetes Rückenteil bei einem erfindungsgemäßen Bremsbelag,
- Fig. 2: eine Draufsicht auf ein Halteblech bei einem erfindungsgemäßen Bremsbelag,
- Fig. 3: eine Längsschnittansicht eines erfindungsgemäßen Bremsbelages,
- Fig. 4: eine schematische Teilschnittansicht eines Trägerblechs bei einem erfindungsgemäßen Bremsbelag zusammen mit einem daran festgelegten Reibsegment und
- Fig. 5a und 5b: Draufsichten auf einen erfindungsgemäßen Bremsbelag bei unterschiedlicher Position der Reibsegmente und unterschiedlicher Flächenverteilung der Reibflächen.

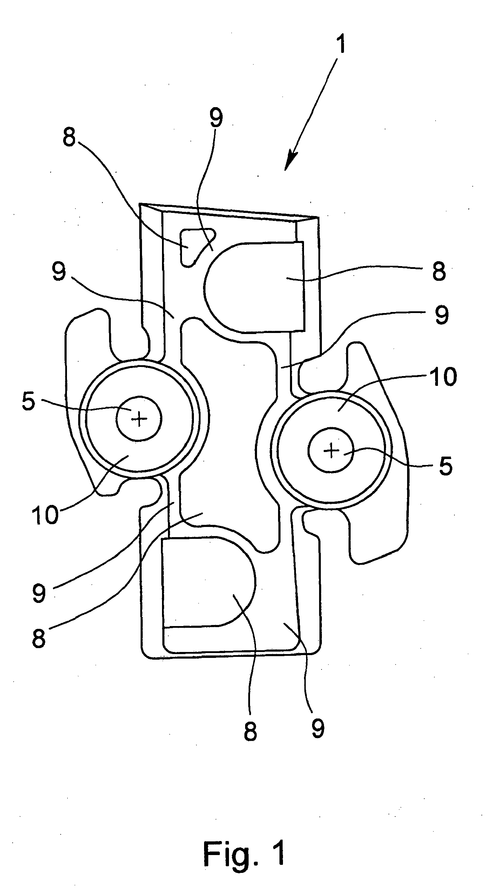

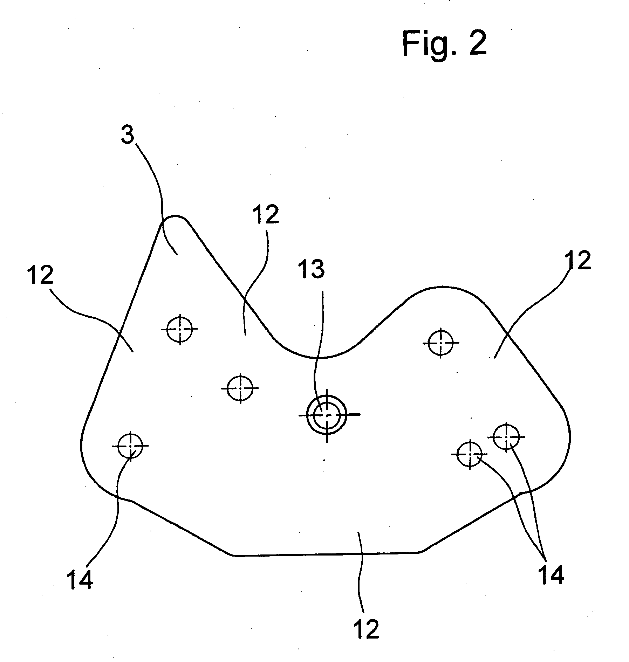

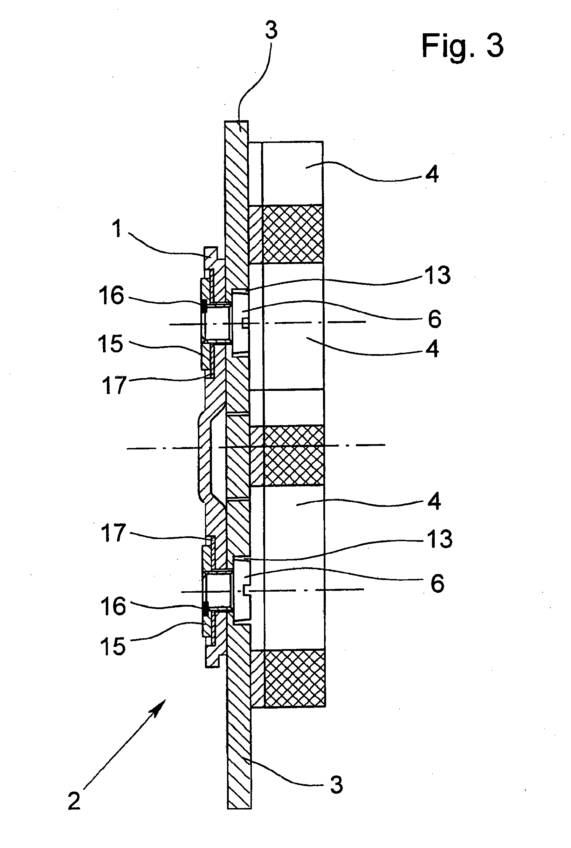

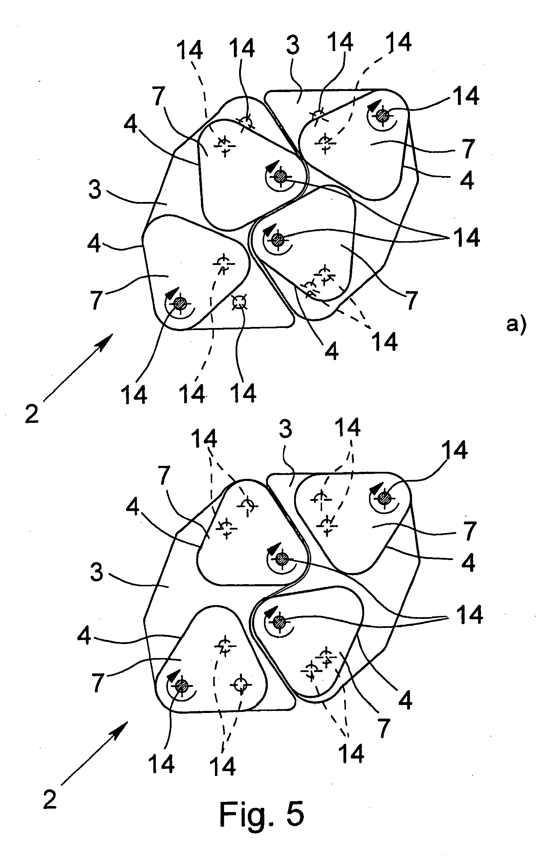

Fig. 1 zeigt eine Draufsicht auf ein als Gußteil ausgebildetes Rückenteil 1 für einen in Fig. 3 dargestellten Bremsbelag 2 für eine nicht dargestellte Scheibenbremse eines Fahrzeugs, wobei das Rückenteil 1 zur Befestigung mit zwei in Fig. 2 dargestellten Trägerblechen 3 vorgesehen ist und wobei an dem Trägerblech 3 eine Mehrzahl von Reibsegmenten 4 befestigt ist, was insbesondere in Fig. 5 gezeigt ist. Das Rückenteil 1 besteht aus Temperguß und zeichnet sich durch eine hohe Wärmeleitfähigkeit aus. Im übrigen weist das Rückenteil 1 eine hohe Festigkeit und Stabilität bei mechanischer Belastung auf.

Zur Befestigung der Trägerbleche 3 weist das Rückenteil 1 zwei Haltebohrungen 5 auf, die zur Aufnahme von in den Fig. 3 und 5 dargestellten Halteelementen 6 vorgesehen sind, wobei jedes Trägerblech 3 mit einem Halteelement 6 an dem Rückenteil 1 gehalten bzw. unverlierbar befestigt ist. Bei dem Halteelement 6 kann es sich um eine Schraube handeln, die nach dem Befestigen der Trägerbleche 3 an dem Rückenteil 1 lösbar oder unlösbar gegen Verlieren gesichert wird. Die Haltebohrungen 5 sind exzentrisch zur Mittelquerachse des Rückenteils 1 angeordnet. Nicht dargestellt ist, daß die Haltebohrungen 5 auch als Langlöcher ausgebildet sein können, um eine Verschiebbarkeit der Trägerbleche 3 vorzugsweise in Richtung einer Mittelachse der Bremsscheibe und damit die Veränderung der Flächenverteilung von Reibflächen 7 der Reibsegmente 4 zu ermöglichen.

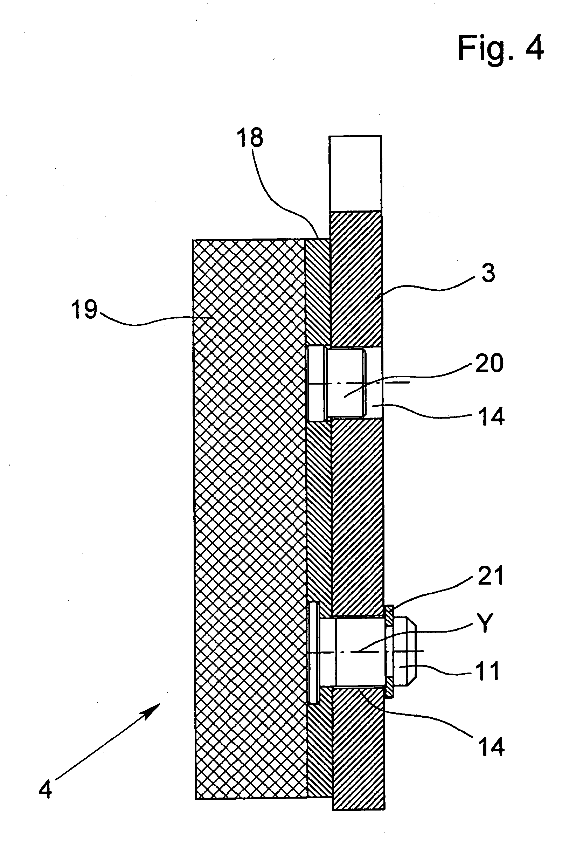

Zur Erhöhung der Stabilität des Rückenteils 1 sind Vertiefungen 8 vorgesehen, was zudem zu einer Material- und Gewichtsersparnis führt. Die zwischen den Vertiefungen 8 gebildeten stegförmigen Bereiche 9 führen zu einer Erhöhung der Steifigkeit des Rückenteils 1. Alle Bereiche 9 liegen auf gleicher Höhe. Zudem sind gegenüber den Bereichen 9 weiter erhöhte ringförmige Bereiche 10 um die Haltebohrungen 5 vorgesehen, gegen die die Trägerbleche 3 im montierten Zustand des Bremsbelages 2 anliegen. Wie sich aus Fig. 4 ergibt, sind die Reibsegmente 4 mittels Befestigungselementen 11 an dem Trägerblech befestigt, wobei die Befestigungselemente 11 die Trägerbleche 3 durchsetzen und in den zwischen dem Rückenteil 1 und den Trägerblechen 3 gebildeten Raum eingreifen.

In Fig. 2 ist eine Draufsicht auf ein Trägerblech 3 eines erfindungsgemäßen Bremsbelages 2 dargestellt, wobei das Trägerblech 3 vollflächig als ebene Platte ausgebildet ist. Insbesondere sind die Randbereiche 12 des Trägerblechs 3 frei von Umkantungen oder Umbiegungen, was es ermöglicht, das Trägerblech 3 bedarfsweise für Bremsbeläge 2 einzusetzen, die an unterschiedliche Reibgurte bzw. Scheibenbremsen angepaßt sind. Darüber hinaus sind eine Haltebohrung 13 für das Halteelement 6 und eine Mehrzahl von weiteren Haltebohrungen 14 vorgesehen. Durch die Lage der Haltebohrungen 14 wird die Position der Reibsegmente 4 nach dem Festsetzen auf dem Trägerblech 3 vorgegeben. Es versteht sich, daß die Geometrie des Trägerblechs 3 auch von der Geometrie des in Fig. 2 dargestellten Trägerblechs 2 abweichen kann.

Das Trägerblech 3 besteht aus Vergütungsstahl mit der Werkstoffbezeichnung 42CrMo4, der sich durch eine hohe Steifigkeit gegen Verformung bei den beim Bremsbetrieb auftretenden Belastungen, insbesondere bei hohen mechanischen Beschleunigungen, auszeichnet.

Fig. 3 zeigt beispielhaft eine Querschnittsansicht durch den Bremsbelag 2, der ein Trägerblech 3 aus 42CrMo4 und ein Rückenteil 1 aus Temperguß aufweist. An dem Trägerblech 3 sind mehrere Reibsegmente 4 lösbar befestigt. Darüber hinaus sind Schrauben als Halteelemente 6 vorgesehen, mit denen die Trägerbleche 3 an dem Rückenteil 1 verschraubt sind. Wie sich aus Fig. 3 ergibt, ist jedes Halteelement 6 auf der Seite des Rückenteils 1 mit einer Mutter 15 verschraubt, wobei das Halteelement 6 und die Mutter 15 durch eine Schweißstelle 16 untrennbar miteinander verbunden sind. Grundsätzlich können die Trägerbleche 3 auch lösbar mit dem Rückenteil 1 verbunden sein. Die Mutter 15 stützt sich gegen eine Scheibe 17 ab.

Wesentlich ist, daß das Trägerblech 3 keine Umkantung an den Rändern aufweist und vollflächig als ebene Platte ausgebildet ist. Im übrigen sind die Haltelemente 6 und das Trägerblech 3 auf der die Reibsegmente 4 aufweisenden Außenseite des Trägerblechs 3 ausgefluchtet, so daß die Reibsegmente 4 vollflächig gegen das Trägerblech 3 anliegen können und die Anordnung der Reibsegmente 4 nicht durch die Lage der Halteelemente 6 begrenzt wird.

In Fig. 4 ist schematisch eine Teilschnittansicht eines Trägerblechs 3 mit einem daran befestigten zweiteiligen Reibsegment 4 dargestellt. Das Reibsegment 4 besteht aus einer Zwischenplatte 18 und einem Reibmaterial 19. Das Reibsegment 4 weist ein bolzenförmiges Befestigungselement 11 und ein Sicherungselement 20 auf. Das Befestigungselement 11 durchgreift die zugeordnete, in dem Trägerblech 3 gebildete weitere Haltebohrung 14 und ist auf der dem Reibsegment 4 abgewandten Flachseite des Trägerblechs 3 axial sicherbar. Hierzu weist das Befestigungselement 11 eine Umfangsnut auf, in der ein geeignetes Sicherungsteil 21 zur axialen Sicherung des Befestigungselementes 11 an dem Trägerblech 3 eingreifen kann. Auch hier versteht sich, daß andere Ausführungsformen von Befestigungselementen vorgesehen sein können, um die Reibsegmente 4 an dem Trägerblech 3 festzusetzen.

Das Sicherungselement 20 ist ebenfalls bolzenförmig ausgebildet und lediglich zur Sicherung des Reibsegmentes 4 gegen ein Verdrehen vorgesehen. Das Sicherungselement 20 greift in eine weitere Haltebohrung 14 des Trägerblechs 3 ein. Grundsätzlich können auch mehrere Sicherungselemente 20 vorgesehen sein.

Das Reibsegment 4 ist um die Mittellängsachse Y des Befestigungselementes 11 drehbar und in wenigstens zwei unterschiedlichen Positionen auf dem Trägerblech 3 verdrehsicher festsetzbar. Unterschiedliche Positionen beschreiben dabei die Ausrichtung bzw. Anordnung der Reibfläche 7 des Reibsegmentes 4. Zum Verdrehen des Reibsegmentes 4 ist es erforderlich, zunächst das Sicherungsteil 21 von dem Befestigungselement 11 zu lösen und das Reibsegment 4 von dem Trägerblech 3 wegzubewegen, so daß das Sicherungselement 20 außer Eingriff mit dem Trägerblech 3 kommt. Anschließend ist das Reibsegment 4 in eine zweite Stellung zu verschwenken, wobei die zweite Stellung festgelegt ist durch eine weitere Haltebohrung 14, in die das Sicherungselement 20 beim anschließenden Wiederauflegen des Reibsegmentes 4 auf die Oberfläche des Trägerblechs 3 eingreift. Damit wird das Reibsegment 4 verdrehsicher in der zweiten Position auf dem Trägerblech 3 festgesetzt.

Grundsätzlich ist es auch möglich, daß das Reibsegment 4 nach dem Lösen des Sicherungsteils 21 von dem Trägerblech 3 abgenommen und das Befestigungselement 11 dabei vollständig aus der Haltebohrung 4 herausgezogen wird. Anschließend kann dann das Reibsegment 4 an einer anderen Stelle des Trägerblechs 3 auf dem Trägerblech 3 befestigt werden, wobei es sich versteht, daß das Trägerblech 3 an dieser anderen Stelle ebenfalls Haltebohrungen 14 in entsprechender Anzahl und Anordnung für das Befestigungselement 11 und das Sicherungselement 20 aufweist. Die Änderung der Reibflächenverteilung erfolgt hier durch Umsetzen von wenigstens einem Reibsegment 4.

In den Fig. 5a und 5b sind Draufsichten auf einen erfindungsgemäßen Bremsbelag 2 dargestellt, der vorliegend vier Reibsegmente 4 zeigt, wobei jeweils zwei Reibsegmente 4 mit einem Trägerblech 3 verbunden sind. Die Reibsegmente 4 weisen Reibflächen 7 auf, die mit der Reibfläche einer nicht dargestellten Scheibenbremse beim Bremsvorgang zusammenwirken. Um die Flächenverteilung der Reibflächen 7 bzw. die gegenseitige Ausrichtung der Reibflächen 7 zueinander zu verändern, ist bei dem dargestellten Bremsbelag 2 vorgesehen, daß alle Reibsegmente 4 wie oben beschrieben drehbar an dem Trägerblech 3 befestigt und in unterschiedlichen Positionen verdrehsicher auf dem Trägerblech 3 festsetzbar sind. Das Trägerblech 3 weist hierzu eine entsprechende Anordnung von Haltebohrungen 14 auf, so wie dies in Fig. 2 gezeigt ist. Jedes Reibsegment 4 weist ein Sicherungselement 20 auf, das in eine Haltebohrung 14 eingreift und das Reibsegment 4 gegen Verdrehen sichert, Durch Verdrehen der Reibsegmente 4 um ein in eine schraffiert dargestellte Haltebohrung 14 eingesetztes Befestigungselement 11 des jeweiligen Reibsegmentes 4 läßt sich die Verteilung von Reib- und Anpreßkräften beim Bremsvorgang entsprechend verändern, um eine optimale Flächenverteilung in Abhängigkeit von konstruktiven Gegebenheiten und Betriebsparametern des Bremsvorgangs zu gewährleisten. Dies führt zu einem geringeren Verschleiß der Reibflächen 7 und der Reibfläche der Bremsscheibe. Die Haltebohrungen 14 sind gleich ausgebildet, können aber auch eine unterschiedliche Größe aufweisen.

Die Veränderung der Flächenverteilung der Reibflächen 7 führt insbesondere zu einer Verringerung des Schrägverschleißes der Bremsmaterialien, wobei die Flächenverteilung der Reibflächen 7 auch im Betrieb, ohne Änderung der Konstruktion, an die Betriebsbedingungen angepaßt werden kann. Durch einfaches Auswechseln der Reibsegmente 4 können andere Größen des Reibbelages realisiert werden. Die Anpassung der Flächenverteilung der Reibflächen 7 an die konstruktiven Gegebenheiten der Bremse und die jeweiligen Betriebsbedingungen ermöglicht eine optimale Druckverteilung beim Betrieb und führt zu wesentlich besseren Naßreibwerten. In diesem Zusammenhang können die Reibsegmente 4 strömungsgünstig angeordnet werden und entsprechend profiliert sein, um eine höhere Leistung oder eine zusätzliche Entlastung der Bremsscheiben durch verbesserte Wärmeabfuhr sicherzustellen.

Die Verringerung der Verschleißneigung führt zu einer Erhöhung der Standzeit des Bremsbelages 2, wodurch Fahrzeuge länger im betriebsbereiten Zustand gehalten werden können, was zu einer höheren Wirtschaftlichkeit des Fahrzeugbetriebes führt. Tritt Schrägverschleiß auf, so kann ohne Neukonstruktion des Bremsbelags 2 die Anordnung der Reibflächen 7 verändert und somit die negative Verschleißneigung verbessert werden.

## Patentansprüche

1. Bremsbelag (2) für eine Scheibenbremse, insbesondere für Schienenfahrzeuge, mit wenigstens einem Trägerblech (3) mit mehreren, lösbar am Trägerblech (3) befestigten Reibsegmenten (4) und mit einem Rückenteil (1), wobei das Trägerblech (3) über wenigstens ein Halteelement (6) am Rückenteil (1) gehalten ist, wobei wenigstens zwei Reibsegmente (4) Reibflächen (7) mit unterschiedlicher Geometrie und/oder unterschiedlicher Größe und/oder mit unterschiedlichem Reibwert aufweisen und/oder aus unterschiedlichen Reibmaterialien bestehen, **dadurch gekennzeichnet daß** bedarfsweise unterschiedliche Reibsegmente (4) an dem Trägerblech (3) befestigbar sind, wobei durch die Befestigung eines Reibsegmentes (4) oder eines unterschiedlichen Reibsegmentes (4) eine Veränderung der Verteilung der Reibflächen und/oder der Reibmaterialien relativ zur Trägeroberfläche bewirkt wird.

2. Bremsbelag nach Anspruch 1, **dadurch gekennzeichnet daß** Reibflächen (7) der Reibsegmente (4) 30 % bis 95 % der Oberfläche des Trägerblechs (3)abdecken.

3. Bremsbelag (2) nach einem der vorhergehenden Ansprüche, **dadurch gekennzeichnet, daß** wenigstens ein Reibsegment (4) unterschiedliche Reibmaterialien aufweist, wobei das Reibsegment (4) wenigstens zwei Reibflächen aufweist, die durch Bereiche des Reibsegmentes (4) aus unterschiedlichen Reibmaterialien gebildet werden.

4. Bremsbelag (2) nach einem der vorhergehenden Ansprüche, **dadurch gekennzeichnet, daß** das Rückenteil (1) als Gussteil ausgebildet ist und aus Temperguß besteht, wobei das Rückenteil (1) einen Kohlenstoffgehalt von 2 bis 4 Gew.-%, einen Siliziumgehalt von 1 bis 2 Gew.-%, einen Mangangehalt von 0,1 bis 1,0 Gew.-% und einen Schwefelgehalt von 0,05 bis 0,5 Gew.-% aufweist.

5. Bremsbelag nach Anspruch 4, **dadurch gekennzeichnet, daß** die Zugfestigkeit Rₘ des Rückenteils (1) zwischen 500 bis 600 MPa, vorzugsweise ca. 550 MPa, und/oder die Dehngrenze R_{p0.2} zwischen 300 bis 400 MPa, vorzugsweise ca. 340 MPa, und/oder die Biegewechselfestigkeit RBW 200 bis 300 MPa, vorzugsweise 250 bis 270 MPa, und/oder die Bruchdehnung A 3 bis 5 %, vorzugsweise ca. 4 %, und/oder die Härte nach Brinell 180 bis 300 HB, vorzugsweise ca. 250 HB, beträgt.

6. Bremsbelag (2) nach einem der vorhergehenden Ansprüche, **dadurch gekennzeichnet, daß** das Trägerblech (3) vollflächig als ebene Platte ausgebildet ist, wobei insbesondere die Randbereiche (12) des Trägerblechs (3) frei von Umkantungen oder Umbiegungen sind und wobei das Trägerblech (3) einen Kohlenstoffgehalt von 0,3 bis 0,5 Gew.-%, einen Siliziumgehalt von weniger als 0,6 Gew.-%, einen Mangangehalt von 0,5 bis 1,0 Gew.-%, einen Phosphorgehalt von 0,03 bis 0,05 Gew.-%,einen Schwefelgehalt von 0,03 bis 0,05 Gew.-%, einen Chromgehalt von 0,8 bis 1,3 Gew.-% und einen Molybdängehalt von 0,1 bis 0,4 Gew.-% aufweist.

7. Bremsbelag (2) nach einem der vorhergehenden Ansprüche, **dadurch gekennzeichnet, daß** wenigstens ein Reibsegment (4) drehbar an dem Trägerblech (3) befestigt und in wenigstens zwei unterschiedlichen Positionen auf dem Trägerblech (3) verdrehsicher festsetzbar ist, wobei durch Positionsänderung des Reibsegmentes (4) eine Veränderung der Verteilung der Reibflächen der Reibsegmente (4) relativ zur Trägerblechoberfläche bewirkt wird.

8. Bremsbelag (2) nach einem der vorhergehenden Ansprüche, **dadurch gekennzeichnet, daß** wenigstens ein Reibsegment (4) verschiebbar an dem Trägerblech (3) befestigt und in wenigstens zwei unterschiedlichen Positionen auf dem Trägerblech (3) festsetzbar ist, wobei durch Positionsänderung des Reibsegmentes (4) eine Veränderung der Verteilung der Reibflächen der Reibsegmente (4) relativ zur Trägerblechoberfläche bewirkt wird.

9. Bremsbelag (2) nach einem der vorhergehenden Ansprüche, **dadurch gekennzeichnet, daß** wenigstens ein Reibsegment (4) durch Umsetzen an zwei unterschiedlichen Stellen auf dem Trägerblech (3) befestigbar ist, wobei die Anzahl der möglichen Befestigungsstellen auf dem Trägerblech (3) größer ist als die maximale Anzahl der auf dem Trägerblech (3) befestigbaren Reibsegmente (4).

10. Bremsbelag nach einem der vorhergehenden Ansprüche, **dadurch gekennzeichnet, daß** zur Verringerung von Schwingungen wenigstens ein Dämpfungselement zwischen dem Trägerblech (3) und dem Rückenteil (1) vorgesehen ist.

11. Modulares Bremsbelagsystem mit einem Bremsbelag (2) für eine Scheibenbremse, insbesondere für Schienenfahrzeuge, mit wenigstens einem Trägerblech (3) mit mehreren, lösbar am Trägerblech (3) befestigbaren Reibsegmenten (4) und mit einem Rückenteil (1), wobei das Trägerblech (3) über wenigstens ein Halteelement (6) am Rückenteil (1) gehalten ist, wobei ein erster Satz von Reibsegmenten (4) und wenigstens ein weiterer Satz von Reibsegmenten (4) vorgesehen sind, wobei die Reibsegmente (4) des ersten Satzes und die Reibsegmente (4) des weiteren Satzes unterschiedliche Geometrien der Reibflächen (7) und/oder unterschiedlich große Reibflächen (7) aufweisen und/oder aus unterschiedlichen Reibmaterialien bestehen, wobei bedarfsweise Reibsegmente (4) des ersten Satzes oder Reibsegmente (4) des weiteren Satzes an dem Trägerblech (3) befestigbar sind und wobei durch Befestigung der Reibsegmente (4) des ersten Satzes oder der Reibsegmente (4) des zweiten Satzes eine Veränderung der Verteilung der Reibflächen und/oder der Reibmaterialien relativ zur Trägeroberfläche bewirkt wird.

12. Modulares Bremsbelagsystem mit einem Bremsbelag (2) für eine Scheibenbremse, insbesondere für Schienenfahrzeuge, mit einer Mehrzahl von Trägerblechen (3), wobei jedes Trägerblech (3) mehrere lösbar am Trägerblech (3) befestigte Reibsegmente (4) aufweist, und mit einem Rückenteil (1), wobei das Trägerblech (3) über wenigstens ein Halteelement (6) am Rückenteil (1) gehalten ist, wobei das Bremsbelagsystem wenigstens ein erstes Trägerblech (3) und wenigstens ein weiteres Trägerblech (3) aufweist, wobei das erste Trägerblech (3) und das weitere Trägerblech (3) unterschiedlich große Befestigungsflächen für die Reibsegmente (4) und/oder Befestigungsflächen mit unterschiedlicher Geometrie und/oder unterschiedlicher Anordnung der Befestigungsstellen für die Reibsegmente und/oder unterschiedlicher Anzahl von Befestigungsstellen für die Reibsegmente (4) aufweisen.

## Claims

1. A brake lining (2) for a disk brake, particularly for rail vehicles, with at least one carrier plate (3) featuring several friction segments (4) that are detachably mounted on the carrier plate (3) and with a rear part (1), wherein the carrier plate (3) is held on the rear part (1) by means of at least one holding element (6), and wherein at least two friction segments (4) feature friction surfaces (7) that have a different geometry and/or different size and/or a different coefficient of friction and/or consist of different friction materials, **characterized in that** different friction segments (4) can be mounted on the carrier plate (3) on demand, wherein the mounting of a friction segment (4) or a different friction segment (4) causes a change in the distribution of the friction surfaces and/or the friction materials relative to the carrier surface.

2. The brake lining according to Claim 1, **characterized in that** the friction surfaces (7) of the friction segments (4) cover 30% to 95% of the surface of the carrier plate (3).

3. The brake lining (2) according to one of the preceding claims, **characterized in that** at least one friction segment (4) features different friction materials, wherein the friction segment (4) features at least two friction surfaces that are formed by regions of the friction segment (4) consisting of different friction materials.

4. The brake lining (2) according to one of the preceding claims, **characterized in that** the rear part (1) is realized in the form of a casting and consists of malleable cast iron, wherein the rear part (1) has a carbon content of 2 to 4 wt.%, a silicone content of 1 to 2 wt.%, a manganese content of 0.1 to 1.0 wt.% and a sulphur content of 0.05 to 0.5 wt.%.

5. The brake lining according to Claim 4, **characterized in that** the rear part (1) has a tensile strength Rₘ between 500 and 600 MPa, preferably about 550 MPa, and/or a proof stress R_{F0.2} between 300 and 400 MPa, preferably about 340 MPa, and/or a flexural fatigue strength RBW of 200 to 300 MPa, preferably 250 to 270 MPa, and/or an elongation at failure A of 3 to 5%, preferably about 4%, and/or a Brinell hardness of 180 to 300 HB, preferably about 250 HB.

6. The brake lining (2) according to one of the preceding claims, **characterized in that** the entire surface of the carrier plate (3) is realized in the form of a plane plate, wherein particularly the edge regions (12) of the carrier plate (3) are free of edgings or hemmings, and wherein the carrier plate (3) has a carbon content of 0.3 to 0.5 wt.%, a silicone content of less than 0.6 wt.%, a manganese content of 0.5 to 1.0 wt.%, a phosphorus content of 0.03 to 0.05 wt.%, a sulphur content of 0.03 to 0.05 wt.%, a chromium content of 0.8 to 1.3 wt.% and a molybdenum content of 0.1 to 0.4 wt.%.

7. The brake lining (2) according to one of the preceding claims, **characterized in that** at least one friction segment (4) is rotatably mounted on the carrier plate (3) and can be non-rotatably fixed on the carrier plate (3) in at least two different positions, wherein a change in the position of the friction segment (4) causes a change in the distribution of the friction surfaces of the friction segments (4) relative to the carrier plate surface.

8. The brake lining (2) according to one of the preceding claims, **characterized in that** at least one friction segment (4) is displaceably mounted on the carrier plate (3) and can fixed on the carrier plate (3) in at least two different positions, wherein a change in the position of the friction segment (4) causes a change in the distribution of the friction surfaces of the friction segments (4) relative to the carrier plate surface.

9. The brake lining (2) according to one of the preceding claims, **characterized in that** at least one friction segment (4) can be movably mounted on the carrier plate (3) at two different points, wherein the number of potential mounting points on the carrier plate (3) is greater than the maximum number of friction segments (4) that can be mounted on the carrier plate (3).

10. The brake lining according to one of the preceding claims, **characterized in that** at least one damping element is provided between the carrier plate (3) and the rear part (1) in order to reduce vibrations.

11. A modular brake lining system with a brake lining (2) for a disk brake, particularly for rail vehicles, with at least one carrier plate (3) featuring several friction segments (4) that can be detachably mounted on the carrier plate (3) and with a rear part (1), wherein the carrier plate (3) is held on the rear part (1) by means of at least one holding element (6), wherein a first set of friction segments (4) and at least one additional set of friction segments (4) are provided, wherein the friction segments (4) of the first set and the friction segments (4) of the additional set feature friction surfaces (7) that have different geometries and/or friction surfaces (7) that have different sizes and/or consist of different friction materials, wherein friction segments (4) of the first set or friction segments (4) of the additional set can be mounted on the carrier plate (3) on demand, and wherein the mounting of the friction segments (4) of the first set or the friction segments (4) of the second set causes a change in the distribution of the friction surfaces and/or the friction materials relative to the carrier surface.

12. A modular brake lining system with a brake lining (2) for a disk brake, particularly for rail vehicles, with a plurality of carrier plates (3), in which each carrier plate (3) features several friction segments (4) that are detachably mounted on the carrier plate (3), and with a rear part (1), wherein the carrier plate (3) is held on the rear part (1) by means of at least one holding element (6), wherein the brake lining system features at least one first carrier plate (3) and at least one additional carrier plate (3), and wherein the first carrier plate (3) and the additional carrier plate (3) feature mounting surfaces for the friction segments (4) that have a different size and/or mounting surfaces that have a different geometry and/or a different arrangement of mounting points for the friction segments and/or a different number of mounting points for the friction segments (4).

## Revendications

1. Garniture de frein (2) pour frein à disque, en particulier pour véhicules ferroviaires, comprenant au moins une plaque support (3) présentant plusieurs segments de friction (4) fixés de manière dissociable à la plaque support (3) et une pièce arrière (1), la plaque support (3) étant maintenue par au moins un élément de retenue (6) sur la pièce arrière (1), au moins deux segments de friction (4) présentant des surfaces de friction (7) à géométrie différente et/ou de taille différente et/ou à valeur de friction différente et/ou étant composés de matériaux de friction différents, **caractérisé en ce que**, en cas de besoin, différents segments de friction (4) peuvent être fixés à la plaque support (3), la fixation d'un segment de friction (4) ou d'un segment de friction différent (4) entraînant une modification de la répartition des surfaces de friction et/ou des matériaux de friction par rapport à la surface support.

2. Garniture de frein selon la revendication 1, **caractérisée en ce que** les surfaces de friction (7) des segments de friction (4) couvrent 30 % à 95 % de la surface de la plaque support (3).

3. Garniture de frein (2) selon une des revendications précédentes, **caractérisée en ce qu'**au moins un segment de friction (4) présente des matériaux de friction différents, le segment de friction (4) présentant au moins deux surfaces de friction qui sont constituées par des zones du segment de friction (4) faites de matériaux de friction différents.

4. Garniture de frein (2) selon une des revendications précédentes, **caractérisée en ce que** la pièce arrière (1) se présente sous forme d'une pièce coulée et est en fonte malléable, la pièce arrière (1) présentant une teneur en carbone de 2 à 4 % en poids, une teneur en silicium de 1 à 2 % en poids, une teneur en manganèse de 0,1 à 1,0 % en poids et une teneur en soufre de 0,05 à 0,5 % en poids.

5. Garniture de frein selon la revendication 4, **caractérisée en ce que** la résistance à la traction Rₘ de la pièce arrière (1) est de 500 à 600 MPa, de préférence environ 550 MPa, et/ou la limite d'étirement R_{poz} de 300 à 400 MPa et de préférence d'environ 340 MPa, et/ou que la résistance à la flexion alternée de 200 à 300 MPa et de préférence d'environ 250 à 270 MPa, et/ou l'étirement à la rupture A est de 3 à 5 %, de préférence d'environ 4 %, et/ou la dureté Brinell de 180 à 300 HB, de préférence d'environ 250 HB.

6. Garniture de frein (2) selon une des revendications précédentes, **caractérisée en ce que** la plaque support (3) se présente sur toute sa surface sous forme d'une plaque plane, les bords (12) de la plaque support (3) étant en particulier exempts de pliures et ou courbures et la plaque support (3) ayant une teneur en carbone de 0,3 à 0,5 % en poids, une teneur en silicium de moins de 0,6 % en poids, une teneur en manganèse de 0,5 à 1,0 % en poids, une teneur en phosphore de 0,03 à 0,05 % en poids, une teneur en soufre de 0,03 à 0,05 % en poids, une teneur en chrome de 0,8 à 1,3 % en poids et une teneur en molybdène de 0,1 à 0,4 % en poids.

7. Garniture de frein (2) selon une des revendications précédentes, **caractérisée en ce qu'**au moins un segment de friction (4) est fixé de manière à pouvoir tourner sur la plaque support (3) et peut être fixé de manière fixe en rotation dans au moins deux positions différentes sur la plaque support (3), le changement de position du segment de friction (4) entraînant une modification de la répartition des surfaces de friction des segments de friction (4) par rapport à la surface de la plaque support.

8. Garniture de frein (2) selon une des revendications précédentes, **caractérisée en ce qu'**au moins un segment de friction (4) est fixé de manière à pouvoir se déplacer sur la plaque support (3) et peut être bloqué dans au moins deux positions différentes sur la plaque support (3), le changement de position du segment de friction (4) entraînant une modification de la répartition des surfaces de friction des segments de friction (4) par rapport à la surface de la plaque support.

9. Garniture de frein (2) selon une des revendications précédentes, **caractérisée en ce qu'**au moins un segment de friction (4) peut être fixé par transfert à deux points différents sur la plaque support (3), le nombre de points de fixation possibles sur la plaque support (3) étant supérieur au nombre maximal de segments de friction (4) pouvant être fixés sur la plaque support (3).

10. Garniture de frein selon une des revendications précédentes, **caractérisée en ce que**, pour réduire les vibrations, au moins un élément d'amortissement est prévu entre la plaque support (3) et la pièce arrière (1).

11. Système modulaire de garniture de frein comportant une garniture de frein (2) pour frein à disque, en particulier pour véhicules ferroviaires, comprenant au moins une plaque support (3) présentant plusieurs segments de friction (4) pouvant être fixés de manière dissociable à la plaque support (3) et une pièce arrière (1), la plaque support (3) étant maintenue par au moins un élément de retenue (6) sur la pièce arrière (1), étant prévu un premier jeu de segments de friction (4) et au moins un autre jeu de segments de friction (4), les segments de friction (4) du premier jeu et les segments de friction (4) de l'autre jeu présentant des géométries différentes des surfaces de friction (7) et/ou des tailles différentes des surfaces de friction (7) et/ou étant faits de matériaux de friction différents, sachant que, en cas de besoin, des segments de friction (4) du premier jeu ou des segments de friction (4) de l'autre jeu peuvent être fixés à la plaque support (3) et que la fixation des segments de friction (4) du premier jeu ou des segments de friction (4) de l'autre jeu entraîne une modification de la répartition des surfaces de friction et/ou des matériaux de friction par rapport à la surface support.

12. Système modulaire de garniture de frein comportant une garniture de frein (2) pour frein à disque, en particulier pour véhicules ferroviaires, comprenant une pluralité de plaques supports (3), chaque plaque support (3) présentant plusieurs segments de friction (4) fixés de manière dissociable à la plaque support (3), et une pièce arrière (1), la plaque support (3) étant maintenue par au moins un élément de retenue (6) sur la pièce arrière (1), le système de garniture de frein présentant au moins une première plaque support (3) et au moins une autre plaque support (3), la première plaque support (3) et l'autre plaque support (3) présentant des surfaces de fixation de tailles différentes pour les segments de friction (4) et/ou des surfaces de fixation de géométrie différente et/ou ayant une disposition différente des points de fixation pour les segments de friction et/ou un nombre différent de points de fixation pour les segments de friction (4).
